**Europäisches Patentamt**

**European Patent Office**

**Office européen des brevets**

(19)

(11) **EP 1 561 616 A1**

(12) **EUROPÄISCHE PATENTANMELDUNG**

(43) Veröffentlichungstag:
**10.08.2005 Patentblatt 2005/32**

(51) Int Cl.⁷: **B60H 1/00**

(21) Anmeldenummer: **05001278.0**

(22) Anmeldetag: **22.01.2005**

(84) Benannte Vertragsstaaten:
**AT BE BG CH CY CZ DE DK EE ES FI FR GB GR
HU IE IS IT LI LT LU MC NL PL PT RO SE SI SK TR**
Benannte Erstreckungsstaaten:
**AL BA HR LV MK YU**

(30) Priorität: **05.02.2004 DE 102004005678**

(71) Anmelder: **Bayerische Motoren Werke
Aktiengesellschaft
80809 München (DE)**

(72) Erfinder: **Schalwig, Jan, Dr.
80797 München (DE)**

(54) **Lüftungs-, Heiz- und/oder Klimaanlage eines Kraftfahrzeuges mit einem elektronischen Steuergerät**

(57) Bei einer Lüftungs-, Heiz- und/oder Klimaanlage eines Kraftfahrzeuges mit einem durch ein elektronisches Steuergerät (1) ansteuerbaren Stellelement (3) zur Einstellung eines vorgegebenen Luftvolumenstromes, mit einem manuell zu betätigenden Bedienelement (4) zur Vorgabe eines Soll-Luftvolumenstromes und mit manuell verstellbaren Endbelüftungsklappen zum Öffnen und Schließen von in den Fahrzeuginnen- raum führenden Luftausströmkanälen, sind Mittel zur Erfassung der Öffnungsgrade (S,B) der Endbelüftungs- klappen vorgesehen, die Eingangsgrößen des Steuer- geräts sind. Das Steuergerät weist Mittel (2) zur Einstel- lung des Luftvolumenstromes in Abhängigkeit von der Ist-Einstellung des Stellelements oder vom vorgegebe- nen Soll-Luftvolumenstrom sowie in Abhängigkeit von den Öffnungsgraden der Endbelüftungsklappen auf.

EP 1 561 616 A1

**Beschreibung**

Die Erfindung bezieht sich auf eine Lüftungs-, Heiz- und/oder Klimaanlage eines Kraftfahrzeuges, im folgenden nur als Klimaanlage bezeichnet, nach dem Oberbegriff des Patentanspruchs 1.

Derartige Klimaanlagen sind seit langer Zeit bekannt. Dabei ist das durch das Steuergerät ansteuerbare Stellelement zur Einstellung eines vorgegebenen Luftvolumenstromes meist ein Gebläse, das üblicherweise sowohl automatisch (z. B. im Automatikbetrieb) als auch abhängig von einem manuell zu betätigenden Bedienelement eingestellt wird. Der Luftstrom wird über mehrere Luftausströmkanäle in den Innenraum geleitet. Man unterscheidet hier zwischen Scheiben-Belüftungskanälen, Oberkörper-Belüftungskanälen, Fond-Belüftungskanälen und Fußraum-Belüftungsklanälen. Die Luftverteilung zwischen Scheiben-Belüftung, Oberkörper- und/oder Fond-Belüftung sowie Fußraum-Belüftung kann zum einen über eine oder mehrere miteinander abgestimmte Belüftungsklappen, sog. Verteilerbelüftungsklappen, über mechanische oder elektrische Bedienelemente manuell oder über das elektronische Steuergerät automatisch verstellt werden. Die Einstellung dieser Verteilerbelüftungsklappen ist dem Steuergerät üblicherweise bekannt. Zudem lässt sich die Luftverteilung durch die verschiedenen Luftausströmkanäle der Oberbelüftung und der Fondbelüftung über mechanische Bedienelemente zumindest im Hinblick auf ihren Öffnungsgrad manuell von den Insassen über zusätzliche Endbelüftungsklappen steuern. Die manuelle Verstellbarkeit dieser Endbelüftungsklappen kann jedoch die optimale Regelung einer Klimaanlage insbesondere im Automatikbetrieb derart stören, dass der Klimakomfort nicht als optimal empfunden wird.

Es ist Aufgabe der Erfindung, eine Klimaanlage eingangs genannter Art im Hinblick auf den Komfort unter Berücksichtigung einer Aufwandsminimierung zu verbessern.

Diese Aufgabe wird durch die Merkmale des Patentanspruchs 1 gelöst. Vorteilhafte Weiterbildungen sind die Gegenstände der abhängigen Ansprüche.

Der Erfindung liegt die Erkenntnis zugrunde, dass insbesondere, ausgehend von geöffneten Verteilerbelüftungsklappen, die die Endbelüftungsklappen enthaltenden Luftausströmkanäle zentral meist nur über einen Luftzubringer vom Gebläse bzw. Stellelement zur Einstellung eines (für eine Mehrzahl oder alle Endbelüftungsklappen gemeinsam) vorgegebenen Luftvolumenstromes gespeist werden. Somit ist der tatsächliche Luftvolumenstrom (Luftmenge pro Zeit) durch einen Luftausströmkanal abhängig vom Öffnungszustand der Endbelüftungsklappen in den jeweils anderen Luftausströmkanälen. Dies führt beispielsweise dazu, dass sich die eingestellte Luftmenge pro Zeit durch einen bestimmten Luftausströmkanal wesentlich erhöht, wenn ausgehend von einem ersten Zustand, bei dem alle Endbelüftungsklappen offen sind, in einem zweiten Zustand alle anderen Endbelüftungsklappen zumindest nahezu manuell geschlossen worden sind, wenn der vorgegebene Luftvolumenstrom nicht verstellt wird. Um den Luftvolumenstrom durch den einen bestimmten Luftausstromkanal wieder auf den Wert im ersten Zustand zu bringen, war bisher ein manuelles Nachstellen des zentralen Gebläses durch einen Bediener (Fahrer, Beifahrer, Fondpassagier) notwendig.

Daher soll durch die Erfindung eine Regelung des Luftvolumenstromes durch die Luftausströmkanäle derart erzielbar sein, dass die Luftmenge pro Zeit durch einen Luftausströmkanal mit (teilweise) geöffneter Endbelüftungsklappe möglichst unabhängig von der Veränderung des Öffnungszustandes der anderen Endbelüftungsklappen ist. Die Erfindung berücksichtigt dabei auch die Position der Verteilerbelüftungsklappen (z. B. offen oder geschlossen) insbesondere in den die Endbelüftungsklappen enthaltenden Luftausströmkanälen. Die Berücksichtigung der Position der Verteilerbelüftungsklappen gehört jedoch grundsätzlich bereits zum Stand der Technik.

Die Mittel zur Erfassung des Öffnungsgrades der Endbelüftungsklappen können beispielsweise als Sensoren zur direkten Erfassung der Stellung der Endbelüftungsklappen, wie Potentiometer, oder als Sensoren zur indirekten Erfassung der Stellung der Endbelüftungsklappen, wie Luftmassenmesser, ausgestaltet sein.

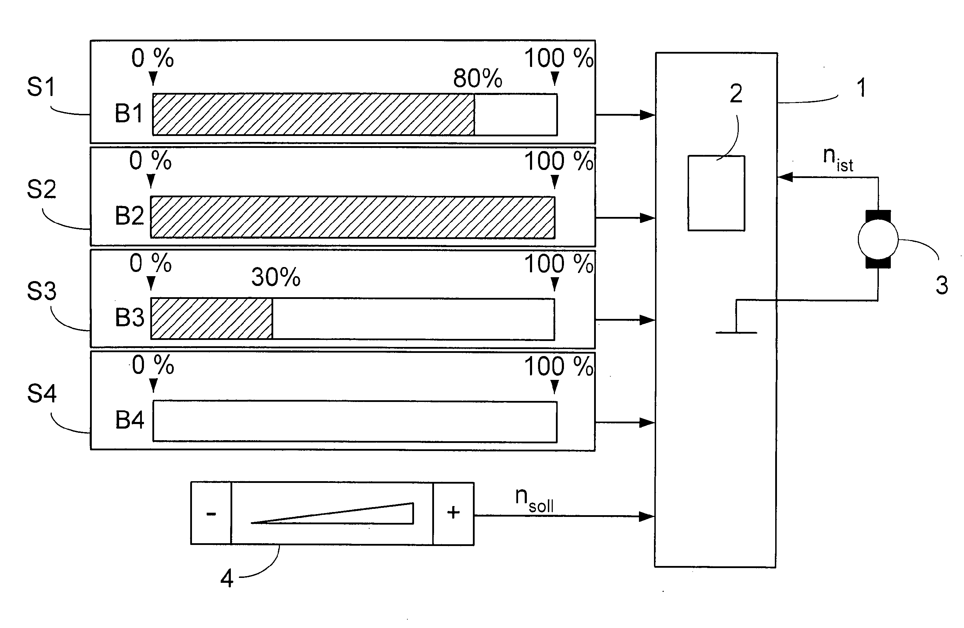

In der Zeichnung wird die Erfindung an Hand eines bevorzugten Ausführungsbeispieles näher erläutert. Die einzige Figur zeigt eine schematische Anordnung der wichtigsten für die Erfindung notwendigen Komponenten.

Das Steuergerät 1 einer hier nicht näher dargestellten Klimaanlage eines Kraftfahrzeuges ist mit einem Stellelement 3 zur Einstellung eines einzigen vorgegebenen Luftvolumenstromes in Form eines einen Elektromotor aufweisenden Gebläses verbunden. Die Klimaanlage soll beispielsweise vier im Hinblick auf ihren Öffnungsgrad manuell verstellbare Endbelüftungsklappen zum Öffnen und Schließen von in den Fahrzeuginnenraum führenden Luftausströmkanälen, insbesondere im Oberkörperbereich und im Fondbereich, aufweisen. Die diesen vier Endbelüftungsklappen zugehörigen Luftausströmkanäle werden über das einzige Gebläse gemeinsam mit Luft gespeist. An den vier Endbelüftungsklappen sind jeweils ein Sensor S1, S2, S3, S4 zur Erfassung des Öffnungsgrades B1, B2, B3, B4, hier zwischen 0% (=vollständig geschlossen) und 100% (=vollständig geöffnet), vorgesehen.

Die Öffnungsgrade B1, B2, B3, B4 der vier Endbelüftungsklappen sind Eingangsgrößen des Steuergeräts 1. Weiterhin sind die Ist-Einstellung des Gebläses 3 sowie der mittels eines manuell zu betätigenden Bedienelements 4 vorgebbare Soll-Luftvolumenstrom $n_{soll}$ Eingangsgrößen des Steuergeräts 1. Der Soll-Luftvolumenstrom ist ein einziger Wert, der für alle (ausgewählten) Endbelüftungsklappen gilt, da aus Kostengründen und zur Vereinfachung des mechanischen Aufbaus nicht für jede Endbelüftungsklappe ein Soll-Luftvolumenstrom durch ein eigenes Stellelement (Gebläse) einstellbar sein soll. Die daraus resultierende Problematik der Luftverteilung wird durch die Erfindung gelöst, durch die eine Regelung des Luftvolumenstromes durch die Luftausströmkanäle derart vorgenommen wird, dass die Luftmenge pro Zeit durch einen Luftausströmkanal mit (teilweise) geöffneter Endbelüftungsklappe möglichst unabhängig von der Veränderung des Öffnungszustandes der anderen Endbelüftungsklappen ist.

Dazu weist das Steuergerät 1 Mittel 2 zur Einstellung des Luftvolumenstromes zumindest in Abhängigkeit von der Ist-Einstellung des Gebläses 3 und/oder in Abhängigkeit vom Soll-Luftvolumenstrom $n_{soll}$. Auch werden in bekannter Weise vorzugsweise die Positionen zumindest der Verteilerbelüftungsklappen insbesondere in den die Endbelüftungsklappen enthaltenden Luftausströmkanälen berücksichtigt, falls vorhanden. Die Mittel 2 sind weiterhin derart ausgestaltet, dass die Einstellung des Luftvolumenstromes auch in Abhängigkeit von den Öffnungsgraden B1, B2, B3, B4 zumindest ausgewählter (hier aller) manuell verstellbarer Endbelüftungsklappen vorgenommen wird. Die Ist-Einstellung des Gebläses 3 ergibt sich also zumindest aus einem mittels des Bedienelements 4 vorgebbaren Soll-Luftvolumenstrom $n_{soll}$ und den Ist-Öffnungsgraden B1, B2, B3, B4 der Endbelüftungsklappen. Die Ist-Einstellung des Gebläses 3 ist äquivalent zu den Größen, durch die sich die Ist-Einstellung des Gebläses 3 ergibt. Dies kann beispielsweise der mittels des manuell zu betätigenden Bedienelements 4 vorgegebene Soll-Luftvolumenstrom $n_{soll}$ allein oder in Kombination mit der Position weiterer nicht ausgewählter bzw. nicht manuell verstellbarer Belüftungsklappen (z.B. auch Verteilerbelüftungsklappen in Luftausströmkanälen ohne Endbelüftungsklappen) sein. Die Einstellung des Luftvolumenstroms in Abhängigkeit von den Öffnungsgraden ausgehend von der Ist-Einstellung des Gebläses 3 ist besonders einfach, wenn sich lediglich die Öffnungsgrade B1, B2, B3, B4 der (ausgewählten) manuell verstellbaren Endbelüftungsklappen ändern.

Generell hat ein Verändern zumindest eines Öffnungsgrades einen Offset im Hinblick auf den vor dem Verändern eines Öffnungsgrades durch die momentane Ist-Einstellung des Gebläses 3 erzeugten (Gesamt-) Luftvolumenstrom zur Folge. Ein Reduzieren zumindest eines Öffnungsgrades hat einen reduzierenden Offset, ein Vergrößern zumindest eines Öffnungsgrades hat einen erhöhenden Offset zur Folge.

Mittels der Zeichnung wird ein konkretes Beispiel zur Bestimmung der erfindungsgemäßen Einstellung des Luftvolumenstroms über das Gebläse 3 bei einem Verändern eines Öffnungsgrades erläutert:

Bei diesem Beispiel wird davon ausgegangen, dass die gegebenenfalls vorhandenen Verteilerbelüftungsklappen in den die Endbelüftungsklappen enthaltenden Luftausströmkanälen offen sind, falls sie überhaupt vorhanden sind.

Es wird zunächst von einem ersten Zustand ausgegangen, bei dem alle Endbelüftungsklappen vollständig offen sind, also Öffnungsgrade von 100% aufweisen. Das Steuergerät 1 bzw. die Mittel 2 erhalten diese Öffnungsgrade B1 bis B4 als Eingangssignale. Die Ist-Einstellung $n_{ist}$ des Gebläses 3 ergibt sich also aus dem vorgegebenen Soll-Luftvolumenstrom $n_{soll}$, der mittels des Bedienelements 4 vorgegeben wurde, unter Berücksichtigung der vollständig geöffneten Endbelüftungsklappen. Hierzu können die Mittel 2 beispielsweise empirisch ermittelte Kennfelddaten oder einen Algorithmus enthalten, durch die bzw. durch den ausgehend von einem vorgegebenen Soll-Luftvolumenstrom ein Maximalwert für die Ist-Einstellung $n_{ist}$ des Gebläses 3 definiert wird, wenn alle Endbelüftungsklappen vollständig geöffnet sind. Durch die Kennfelddaten oder den Algorithmus wird dieser Maximalwert entsprechend der Summe aller Öffnungsgrade reduziert, wenn mindestens ein Öffnungsgrad kleiner als 100% ist.

Im dargestellten Ausführungsbeispiel liegen in einem dem ersten Zustand folgenden zweiten Zustand folgende Öffnungsgrade vor:

B1= 80%
B2= 100%
B3= 30%
B4= 0%

Im ersten Zustand war die Summe aller Öffnungsgrade 400%.

Im zweiten Zustand ist die Summe aller Öffnungsgrade 210%.

Die Mittel 2 sind derart ausgestaltet, dass im zweiten Zustand eine Reduzierung des vom Soll-Luftvolumenstrom abhängigen Maximalwertes für die Ist-Einstellung $n_{ist}$ des Gebläses auf 52,5 % stattfindet. Die Ist-Einstellung $n_{ist}$ wird also im zweiten Zustand ausgehend vom Maximalwert im ersten Zustand um einen Offset reduziert, der einer Reduzierung auf 52,5% entspricht.

Allgemein sind die Mittel 2 also derart ausgestaltet, dass ausgehend von einem zumindest auch vom Soll-Luftvolumenstrom $n_{soll}$ abhängiger Maximalwert für die Ist-Einstellung des Stellelements 3 für den Fall, dass alle Endbelüftungsklappen vollständig geöffnet sind, ein reduzierter Luftvolumenstrom durch die Einstellung des Stellelements 3 erzeugt wird, wenn mindestens eine Endbelüftungsklappe nicht vollständig geöffnet wird. Dabei ergibt sich der Wert für die erfindungsgemäße Einstellung des Stellelements 3 durch die Multiplikation des oben definierten Maximalwertes (:=MAX) mit dem Verhältnis der Summe aller einer vollständigen Öffnung zugeordneten Öffnungsgrade (:=B1max+B2max+ B3max+B4max) zu der Summe aller tatsächlichen Öffnungsgrade(:=B1+B2+B3+B4). Daraus ergibt sich eine (neue) erfindungsgemäße Ist-Einstellung des Stellele-

ments 3:

$$n_{ist} = MAX \times \frac{(B1 + B2 + B3 + B4)}{(B1max + B2max + B3max + B4max)}$$

(für das vorliegende Ausführungsbeispiel)

Erfindungsgemäß ist nicht die Durchführung dieser speziellen Formel, sondern jede Art der Ermittlung des Ergebnisses dieser Formel relevant.

Werden von dem Gebläse auch Luftauslasskanäle ohne Endbelüftungsklappen über weitere Belüftungsklappen (z. B. Verteilerbelüftungsklappen für Scheibenbelüftung und/oder Fußraumbelüftung) gespeist (in der Zeichnung nicht dargestellt), wird durch die entsprechende Ausgestaltung der Mittel 2 (z. B. entsprechender Programmteil im Steuergerät 1) zur Einstellung des Luftvolumenstromes in Abhängigkeit von den Öffnungsgraden B1, B2, B3, B4 der Luftvolumenstrom auch in Abhängigkeit von der Position dieser weiterenBelüftungsklappe(n) eingestellt. Unter dem Begriff Position kann beispielsweise auch ein bestimmter (aber automatisch eingestellter) Öffnungsgrad oder einfacher nur eine entsprechend einem Steuersignal offene oder geschlossene Stellung verstanden werden. Diese Weiterbildung hat ebenfalls einen reduzierenden Offset (bei reduziertem Öffnungsgrad bzw. bei geschlossener Stellung) oder einen erhöhenden Offset (bei erhöhtem Öffnungsgrad bzw. bei geöffneter Stellung) im Hinblick auf den (Gesamt-) Luftvolumenstrom zur Folge.

Ergänzend sei erwähnt, dass die Erfindung beispielsweise auch für Klimaanlagen gültig ist, die mehr als nur ein Gebläse aufweisen. Bei derartigen Klimaanlagen kann beispielweise ein erstes Gebläse einer ersten Auswahl manuell verstellbarer Endbelüftungsklappen (z. B. die im linken Fahrgastraum) und ein zweites Gebläse einer zweiten Auswahl manuell verstellbarer Endbelüftungsklappen (z. B. die im rechten Fahrgastraum) zugeordnet sein. Die Erfindung betrifft dann je ein Gebläse mit den ihm zugeordneten Endbelüftungsklappen.

In einer weiteren Ausgestaltung der Erfindung (hier nicht dargestellt) hat die Klimaanlage ebenfalls nur ein manuell zu betätigendes Bedienelement zur Vorgabe eines einzigen Soll-Luftvolumenstromes, und weist aber zumindest in den den ausgewählten Belüftungsklappen zugeordneten Luftausstromkanälen jeweils ein eigenes Stellelement zur Erzeugung eines Luftvolumenstromes auf. Alle diese Stellelemente sind getrennt durch das Steuergerät ansteuerbar. Die Mittel zur Einstellung des Luftvolumenstromes in Abhängigkeit von den Öffnungsgraden der Endbelüftungsklappen sind dabei derart ausgestaltet, dass jedes Stellelement einerseits in Abhängigkeit vom Öffnungsgrad der ihm zugeordneten Endbelüftungsklappe und andererseits in Abhängigkeit vom mittels des manuell zu betätigenden Bedienelements vorgebbaren einzigen Soll-Luftvolumenstrom angesteuert wird.

Hierdurch kann zwar der Komfort noch weiter erhöht werden, der Aufwand und die Kosten sind jedoch ebenfalls höher. Das in der Zeichnung dargestellte einfachere Ausführungsbeispiel wird daher bevorzugt.

**Patentansprüche**

1. Lüftungs-, Heiz- und/oder Klimaanlage eines Kraftfahrzeuges mit einem elektronischen Steuergerät, mit einem durch das Steuergerät ansteuerbaren Stellelement zur Einstellung eines vorgegebenen Luftvolumenstromes, mit einem manuell zu betätigenden Bedienelement zur Vorgabe eines Soll-Luftvolumenstromes und mit zumindest im Hinblick auf ihren Öffnungsgrad manuell verstellbaren Endbelüftungsklappen zum Öffnen und Schließen von in den Fahrzeuginnenraum führenden Luftausströmkanälen, **dadurch gekennzeichnet, dass** Mittel (S1, S2, S3, S4) zur Erfassung des Öffnungsgrades (B1, B2, B3, B4) der Endbelüftungsklappen vorgesehen sind, wobei die Öffnungsgrade der Endbelüftungsklappen Eingangsgrößen des Steuergeräts (1) sind, dass das Steuergerät (1) Mittel (2) zur Einstellung des Luftvolumenstromes in Abhängigkeit von der Ist-Einstellung des Stellelements (3) und/oder vom vorgegebenen Soll-Luftvolumenstrom (n_soll) sowie in Abhängigkeit von den Öffnungsgraden (B1, B2, B3, B4) zumindest ausgewählter manuell verstellbarer Endbelüftungsklappen aufweist.

2. Lüftungs-, Heiz- und/oder Klimaanlage nach Patentanspruch 1 oder 2 mit mindestens einer weiteren Belüftungsklappe in einem keine Endbelüftungsklappe enthaltenden Luftausstromkanal, **dadurch gekennzeichnet, dass** die Mittel (2) zur Einstellung des Luftvolumenstromes in Abhängigkeit von den Öffnungsgraden (B1, B2, B3, B4) zumindest ausgewählter Endbelüftungsklappen derart ausgestaltet sind, dass der Luftvolumenstrom auch in Abhängigkeit von der Position der mindestens einen weiteren Belüftungsklappe eingestellt wird.

3. Lüftungs-, Heiz- und/oder Klimaanlage nach einem der vorangegangenen Patentansprüche mit einem manuell zu betätigenden Bedienelement zur Vorgabe eines Soll-Luftvolumenstromes, **dadurch gekennzeichnet, dass** in den zumindest den ausgewählten Entbelüftungsklappen zugeordneten Luftausstromkanälen jeweils ein eigenes Stellelement zur Erzeugung eines Luftvolumenstromes angeordnet ist, dass alle Stellelemente getrennt durch das Steuergerät (1) ansteuerbar sind und dass die Mittel (2) zur Einstellung des Luftvolumenstromes in Abhängigkeit von den Öffnungsgraden der Endbelüftungsklappen derart ausgestaltet sind, dass jedes Stellelement einerseits in Abhängigkeit vom Öffnungsgrad der ihm zugeordneten Endbelüftungsklappe und andererseits in Abhängigkeit vom Soll-Luftvolumenstrom ($n_{soll}$) angesteuert wird.

S1

0 %    100 %

80%

B1

S2

0 %    100 %

B2

S3

0 %    100 %

30%

B3

S4

0 %    100 %

B4

2

1

$n_{ist}$

3

−    +    $n_{soll}$

4

**EP 1 561 616 A1**

Europäisches
Patentamt

**EUROPÄISCHER RECHERCHENBERICHT**

Nummer der Anmeldung

EP 05 00 1278

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 100 36 509 C1 (BEHR-HELLA THERMOCONTROL GMBH) 18. April 2002 (2002-04-18) * Absatz [0019] - Absatz [0022]; Ansprüche 6,10; Abbildungen 1-4 * ----- | 1-3 | B60H1/00 |
| A | DE 197 35 858 C1 (DAIMLER-BENZ AKTIENGESELLSCHAFT, 70567 STUTTGART, DE) 13. August 1998 (1998-08-13) * Spalte 2, Zeile 36 - Spalte 3, Zeile 26; Abbildungen 1-3 * ----- | 1-3 | |
| A | US 6 347 987 B1 (ICHISHI YOSHINORI ET AL) 19. Februar 2002 (2002-02-19) * Absatz [0083]; Abbildung 3 * ----- | 1-3 | |

RECHERCHIERTE SACHGEBIETE (Int.Cl.7)

B60H

Der vorliegende Recherchenbericht wurde für alle Patentansprüche erstellt

| Recherchenort | Abschlußdatum der Recherche | Prüfer |
|---|---|---|
| München | 4. Mai 2005 | Gumbel, A |

**ANHANG ZUM EUROPÄISCHEN RECHERCHENBERICHT
ÜBER DIE EUROPÄISCHE PATENTANMELDUNG NR.**

EP 05 00 1278

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-05-2005

| Im Recherchenbericht angeführtes Patentdokument | Datum der Veröffentlichung | Mitglied(er) der Patentfamilie | Datum der Veröffentlichung |
|---|---|---|---|
| DE 10036509 C1 | 18-04-2002 | KEINE | |
| DE 19735858 C1 | 13-08-1998 | KEINE | |
| US 6347987 B1 | 19-02-2002 | JP 2000219039 A<br>DE 19956259 A1 | 08-08-2000<br>08-06-2000 |

Für nähere Einzelheiten zu diesem Anhang : siehe Amtsblatt des Europäischen Patentamts, Nr.12/82

EPO FORM P0461